# EUROPÄISCHE PATENTSCHRIFT

(11) **EP 3 864 437 B1**
(45) Veröffentlichungstag und Bekanntmachung des Hinweises auf die Patenterteilung: **14.09.2022**
(21) Anmeldenummer: 19779508.1
(22) Anmeldetag: 04.10.2019
(51) Int. Cl.: G01S 17/931, G01S 7/481, G01S 13/931, H01Q 3/02, H01Q 1/42, G01S 7/497, G01S 7/40, H01Q 1/32, G01S 7/02

(54) **UMFELDSENSOR MIT BEWEGLICHER SENSOREINHEIT FÜR KRAFTFAHRZEUGE**
VEHICLE SURROUNDINGS SENSOR WITH MOVABLE SENSOR UNIT
CAPTEUR D'ENVIRONNEMENT DE VÉHICULE POURVU D'UNE UNITÉ DE CAPTEUR MOBILE

(30) Priorität: 10.10.2018 EP 18199529
(43) Veröffentlichungstag der Anmeldung: 18.08.2021
(73) Patentinhaber: Covestro Intellectual Property GmbH & Co. KG, 51373 Leverkusen (DE)
(72) Erfinder: HAGEN, Rainer, 51377 Leverkusen (DE); GRIMM, Thomas, 50765 Köln (DE); GROSSER, Ulrich, 51515 Kürten (DE); MEYER, Alexander, 40489 Düsseldorf (DE); KLEIN, Andreas, 51371 Leverkusen (DE); HINZMANN, Dirk, 50259 Pulheim (DE); CAPELLEN, Peter, 47803 Krefeld (DE); OSER, Rafael, 47800 Krefeld (DE)
(74) Vertreter: Levpat
(86) Internationale Anmeldenummer: PCT/EP2019/076921
(87) Internationale Veröffentlichungsnummer: WO 2020/074391

(56) Entgegenhaltungen:
- EP-A2- 1 980 874
- DE-U1- 20 221 683
- US-A1- 2017 315 210
- US-B1- 6 573 860

## Beschreibung

Die Erfindung wird im Vorrichtungsanspruch 1 und in korrespondierenden Verfahrensanspruch 13 definiert.

Die Erfindung betrifft ein Sensorsystem für ein Kraftfahrzeug umfassend ein Sensorgehäuse und einen darin angeordneten und an einer bewegbaren Sensorhalterung gehaltenen aktiven oder passiven Sensor mit einer auf Strahlungs- oder Schallwellendetektion beruhenden Sensorik sowie einer dem Sensor zugeordneten Messeinrichtung und einer mit dieser gekoppelten Steuerungseinrichtung für die Sensorhalterung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung. Die Erfindung betrifft ferner ein Verfahren zum Betreiben eines solchen Sensorsystems sowie ein Kraftfahrzeug, welches mit einem derartigen Sensorsystem ausgerüstet ist.

Fahrerassistenzsysteme sind Einrichtungen im Kraftfahrzeug, die zur Steigerung des Fahrkomforts und der Sicherheit dienen. Fortschrittliche Fahrerassistenzsysteme ermöglichen sogar hoch automatisiertes und autonomes Fahren. Bei solchen teil- und vollautonomen Fahrzeugen werden besonders hohe Anforderungen an die Funktion der Umfeldsensoren gestellt. Sie basieren z.B. auf digitaler Kamera-, Radar- und Lidar-Technik. Kameras sind kompakte optische Systeme mit Photozellen, die hochaufgelöste Bilder der Umgebung erfassen. Radar- (Radio Detection and Ranging) und Lidar-Sensoren (Light Detection And Ranging), seltener auch Ladar genannt (Laser Detection and Ranging), bilden zusammen mit den Kameras und ggf. weiteren Sensortypen einen digitalen Sensorverbund, der auf Datenfusion und hoher Signalredundanz aufbaut. Durch präzise Objekterkennung, Objektklassifizierung und die Erzeugung digitaler Umgebungskarten in Echtzeit macht das Sensorsystem sicheres autonomes Fahren bei unterschiedlichen Fahr-, Straßen- und Wetterbedingungen möglich. Funktionierende, ausfallsichere Sensoren sind die Grundvoraussetzung für teil- und vollautonomes Fahren. Eine wesentliche technische Aufgabe dabei ist es, die Funktion des Sensors, der hinter einer durch Witterungs- und Gebrauchseinflüsse verschmutzten oder beschädigten Sensorschutzabdeckung sitzt, zu erhalten.

Verschmutzung entsteht z.B. durch von der Straße aufgewirbelten fest sitzenden Staub, Insekten, Vogelkot, Schneematsch, angetrocknetes Schmutzwasser, sowie jede Art von Partikeln oder Flüssigkeiten. Verschmutzung kann z.B. ebenso durch Staub, sowie jede Art von Partikeln oder Flüssigkeiten entstehen, die sich an der Innenseite der Sensorschutzabdeckung festsetzen. Zur Schädigung der Sensorschutzabdeckung zählt man z.B. Abrieb, Kratzer, Erosion, Risse, Absplitterungen, Deformation, Quellung, Trübung und Verfärbung, entweder in der flächigen Abdeckung des Scheibenkörper selbst oder in mindestens einer seiner Komponenten, z.B. Lackschicht, Klebeschicht oder Dekorelement. Verschmutzungen und Schädigungen führen dazu, dass die vom Sensor zu detektierenden elektromagnetischen Wellen, ebenso wie die emittierten Wellen (je nach Typ Infrarotlicht, Funk- oder Mikrowellen) durch Absorption, Reflexion oder Streuung gedämpft oder abgelenkt werden. Dies kann zu unterschiedlichem sensorischen Fehlverhalten führen, insbesondere zu partiellem bis vollständigem Signalausfall, Verlust an Sensorreichweite, Verlust an Ortsauflösung, Fehlern in der Objekterkennung und im Geschwindigkeitsvectoring.

Im Stand der Technik finden sich Maßnahmen zur Reinigung verschmutzter Sensorabdeckungen. So ist in der DE 10 2010 055 113 A1 eine Reinigungsvorrichtung mit zumindest einer Spritzdüse beschrieben, die eine Reinigungsflüssigkeit mit hohem Druck auf mindestens eine der Sensorschutzabdeckungen spritzt und in Verbindung mit einer Heizung für die Flüssigkeit eine hohe Reinigungsleistung auch bei kalten Temperaturen erzielt.

In der US 2015/0090291 sind zusätzlich Wischer beschrieben, die die Scheibe vor dem Sensor reinigen können.

In der DE 10 2013 207 482 A1 sind beheizbare Flächenelemente beschrieben, die insbesondere zum Aufheizen von Radarabdeckungen dienen. Durch Aufheizen der Abdeckung können Schmutz und Beläge aus Eis und Schnee an- und abgetaut und Feuchtigkeit reduziert werden, was zu einer verbesserten Durchlässigkeit der Radarwellen führt.

Im Stand der Technik finden sich Software basierte Lösungen für den Umgang mit Signalverlust in sog. blinden Sensoren, oder mit nicht eindeutigen Sensorsignalen. Die US 2010/0235129 beschreibt die Korrelation von Signalen mehrerer Sensoren (Sensorfusion), wodurch der autonome Betrieb eines Fahrzeugs auch bei fehlenden, nicht zuordenbaren oder nicht eindeutigen Sensorsignalen aufrechterhalten werden kann.

Die DE 199 45 268 A1 beschreibt ein ähnliches Verfahren und eine Vorrichtung zur Erkennung des Sensorszustands hinsichtlich Verschmutzung und Blindheit. Dies sind kostengünstige Lösungen, weil sie Teil der elektronischen Sensorintelligenz sind.

Im Stand der Technik findet sich keine Lehre zum Handeln über die innersensorische Korrektur von Störungen in Folge üblichen Gebrauchsverschleißes der Sensorschutzabdeckung oder anderweitiger Schädigung derselben, hervorgerufen durch äußere mechanische oder witterungsbedingte Einwirkung. Die angeführten Beispiele zur Sensorintelligenz und Sensorfusion können nur die Wirkung eines Signalverlusts im Sensorverbund, aber nicht die Ursache des Signalausfalls beseitigen, und damit bleibt ein erhöhtes Sicherheitsrisiko in Verbindung mit dem autonomen Fahren verbunden.

Die Aufgabe der vorliegenden Erfindung bestand somit darin, ein Sensorsystem für ein Kraftfahrzeug zur Verfügung zu stellen, welches im Falle einer die Funktionsweise des Sensors beeinträchtigenden Verschmutzung oder lokal begrenzten Beschädigung der Sensorschutzabdeckung selbsttätig in der Lage ist, die Funktionsweise des Sensors wieder herzustellen, ohne dass der Sensor dafür ausgetauscht oder repariert werden muss. Mit anderen Worten ist es ein wesentlicher Gedanke der Erfindung, Sender und/oder Empfänger auf einer beweglichen Einheit zu fixieren und diese Einheit im Falle, dass ein Defekt das eingehende und/oder ausgehende Signale stört, gezielt neu auszurichten, so dass das entsprechende Signal am Defekt vorbei gelenkt wird.

Die erfindungsgemäße bewegliche Einheit dient also insbesondere dazu, die jeweilige Komponente - Sender und/oder Empfänger - innerhalb des Gehäusemoduls neu auszurichten, so dass es durch eine gezielte laterale Verschiebung und/oder Rotation gelingt,
a) ausgesandte Signale an einer anderen, defektfreien Stelle durch die Sensorschutzabdeckung zu schicken bzw.
b) den Empfänger so zu positionieren, dass er eingehende Signale störungsfrei erfassen kann.

Die erfindungsgemäße bewegliche Einheit ist beispielsweise als mechanische Verschiebe- oder Dreheinheit ausgelegt, die in einer bevorzugten Ausführungsform fest mit dem Gehäusemodul verbunden ist.

Die Aufgabe wurde bei einem Sensorsystem der eingangs genannten Art dadurch gelöst, dass der Sensor bewegbar gehalten und mit einer Messeinrichtung in der Weise gekoppelt ist, dass der Sensor mittels einer Steuerungseinrichtung im Falle der Feststellung einer Beschädigung an eine andere Position verfahren werden kann, in der der Sensor außerhalb des Einflussbereichs der Beschädigung arbeiten kann.

Die Erfindung, gemäß Anspruch 1, betrifft somit ein Sensorsystem für ein Kraftfahrzeug umfassend ein Sensorgehäuse und einen darin angeordneten und an einer bewegbaren Sensorhalterung gehaltenen aktiven oder passiven Sensor mit einer auf Strahlungsdetektion beruhenden Sensorik sowie einer dem Sensor zugeordneten Messeinrichtung und einer mit dieser gekoppelten Steuerungseinrichtung für die Sensorhalterung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung, wobei das Sensorsystem dadurch gekennzeichnet ist, dass die Messeinrichtung derart ausgebildet ist, dass sie geeignet ist, im Erfassungsbereich des Sensors zu überprüfen, ob und in welchem Abschnitt die signaldurchlässige Abdeckung einen Bereich mit verringerter Signaldurchlässigkeit aufweist, wobei die Messeinrichtung mit der Steuerungseinrichtung in der Weise zusammenwirkt, dass die Steuerungseinrichtung die Position des Sensors in der Weise verändern kann, dass der Bereich mit verringerter Signaldurchlässigkeit außerhalb des Erfassungsbereichs des Sensors liegt.

Nach einer bevorzugten Ausführungsform des erfindungsgemäßen Sensorsystems ist der Sensor ausgewählt aus Radarsensoren, Lichtsensoren, insbesondere Lidar-Sensoren auf Basis von Lasern oder Leuchtdioden und Bilderfassungssensoren, wie sie beispielsweise in Rückfahr-, Front oder Umfeldkameras verwendet werden.

Der Sensor kann über eine Sendeeinrichtung und eine hiervon getrennte Empfangseinrichtung verfügen, wobei die Sendeeinrichtung und/ oder die Empfangseinrichtung an der bewegbaren Sensorhalterung befestigt ist oder die Sendeeinrichtung und die Empfangseinrichtung jeweils separat an bewegbaren Sensorhalterungen befestigt sind. Die Sensorhalterung ist bevorzugt in alle Raumrichtungen verfahrbar, um sämtliche Achsen drehbar und/ oder kippbar ausgestaltet. Hierdurch kann das System sehr flexibel verstellt werden, um Bereiche mit verringerter Signaldurchlässigkeit zu umgehen und die Funktionsfähigkeit des Sensors aufrechtzuerhalten.

Die Bewegung der Sensorhalterung kann beispielsweise durch wenigstens einen der Sensorhalterung zugeordneten Elektromotor, ein piezoelektrisches Element, oder ein hydraulisches Element erfolgen. Die Sensorhalterung kann ferner am Sensorgehäuse fixiert sein, insbesondere auf der der signaldurchlässigen Abdeckung gegenüberliegenden Fläche des Sensorgehäuses. Die Fixierung hält dabei den Sensor nicht ortsfest, sondern ist derart ausgestaltet, dass sie dieser die vorgenannten Möglichkeiten der Verstellbarkeit erlaubt. Insbsondere kann die Bewegung der Sensorhalterung über einen Riemenantrieb, insbesondere einen Keilriemenantrieb, einen Schiebeschlitten, eine Drehvorrichtung, wie beispielsweise einen Drehteller oder auch in einer kardianischen Aufhängung mittels geeigneter Antriebe erfolgen.

Die Prüfung, ob und in welchem Abschnitt die signaldurchlässige Abdeckung einen Bereich mit verringerter Signaldurchlässigkeit aufweist, kann im Prinzip auf jede dem Fachmann zu diesem Zweck bekannte Weise erfolgen, vorzugsweise mittels einer der Messeinrichtung zugeordneten Recheneinheit. Hierzu kann die Recheneinheit mit einem Datenverarbeitungsprogramm betreibbar ausgestaltet sein, mittels welchem die Prüfung, ob und in welchem Abschnitt die signaldurchlässige Abdeckung einen Bereich mit verringerter Signaldurchlässigkeit aufweist, über eine Differenzbilderkennung unter Einsatz desselben Sensors oder verschiedener Sensoren vorgenommen werden, wobei bei Einsatz verschiedener Sensoren insbesondere eine Sensorfusion eingesetzt wird. Ein geeignetes Verfahren für eine Sensorfusion ist beispielsweise in US 2010/0235129 A offenbart.

Vorzugsweise ist die Steuerungseinrichtung derart ausgestaltet, dass sie nach einer Positionsänderung des Sensors diese neue Position an das Bordnetz des Fahrzeugs weitergibt, sodass dort eine Umrechnung der vom Sensor gelieferten Daten in der Weise erfolgen kann, dass die neue Sensorposition im Vergleich zur ursprünglichen Sensorposition als Korrekturgröße einbezogen wird. Die Umrechnung der neuen Position kann aber auch in der Recheneinheit des Sensorsystems erfolgen, sodass bereits positionskorrigierte Signale vom Sensorsystem an das Bordnetz des Fahrzeugs gesendet werden können.

Die Messeinrichtung und die Steuerungseinrichtung können unabhängig voneinander innerhalb oder außerhalb des Sensorgehäuses positioniert sein. In einigen Fällen kann es bevorzugt sein, die Messeinrichtung und die Steuerungseinrichtung innerhalb des Sensorgehäuses anzuordnen weil hierdurch die gesamte Einheit ein Bauteil bildet und abgesehen von der Energieversorgung und der Anbindung an das Datennetz des Fahrzeugs keine zusätzlichen Leitungen durch das Sensorgehäuse geführt werden müssen, was möglicherweise zu Dichtigkeitsproblemen führen könnte.

Nach einer bevorzugten Ausgestaltung des erfindungsgemäßen Sensorsystems ist die Messeinrichtung so ausgestaltet, dass diese ein Fehlersignal ausgeben kann, für den Fall, dass die Position des Sensors nicht in der Weise veränderbar ist, dass der Bereich mit verringerter Signaldurchlässigkeit außerhalb des Erfassungsbereichs des Sensors liegt. Dieses Fehlersignal kann an die Bordelektronik des Fahrzeugs weitergeleitet werden und dort einen Fehlercode auslösen, der die Notwendigkeit des Austauschs des Sensors und/oder dessen nicht ordnungsgemäße Funktionsweise anzeigt, damit sich der Fahrzeugnutzer nicht auf einen defekten Sensor verlässt und es zu einer Fahrzeugbeschädigung oder dergleichen kommt.

Das Sensorsystem ist weiter bevorzugt derart ausgestaltet, dass die Prüfung, ob und in welchem Abschnitt die signaldurchlässige Abdeckung einen Bereich mit verringerter Signaldurchlässigkeit aufweist, beim Einschalten des Sensorsystems und /oder in frei wählbaren zeitlichen Intervallen durchführbar ist. Dadurch ist sichergestellt, dass der Sensor in regelmäßigen Abständen überprüft und dessen Funktionstätigkeit sichergestellt ist.

Das erfindungsgemäße Sensorsystem kann ferner so angelegt sein, dass zwischen dem Sensor und der signaldurchlässigen Abdeckung eine signaldurchlässige innere Schutzabdeckung vorgesehen ist, welche sich vorzugsweise bis an die seitlichen Innenwände der Gehäuseabdeckung erstreckt. Auf diese Weise kann der innenliegende Sensor vor schädigenden Einflüssen selbst dann geschützt bleiben, wenn die signaldurchlässige Abdeckung beispielsweise einen Riss oder ein Loch aufweist.

Die signaldurchlässige Abdeckung und/ oder die signaldurchlässige innere Schutzabdeckung können aus einem transparenten Kunststoff oder Glas aufgebaut sein, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen. Besonders bevorzugt sind hier auf Grund ihrer optischen und mechanischen Eigenschaften Polycarbonat und Polymethylmethacrylat, ganz besonders wegen des extrem zähen Verhaltens Polycarbonat.

Ein weiterer Gegenstand der vorliegenden Erfindung, gemäß Anspruch 13, betrifft ein Verfahren zum Betreiben eines Sensorsystems für ein Kraftfahrzeug umfassend ein Sensorgehäuse und einen darin angeordneten und an einer bewegbaren Sensorhalterung gehaltenen aktiven oder passiven Sensor mit einer auf Strahlungsdetektion beruhenden Sensorik sowie einer dem Sensor zugeordneten Messeinrichtung und einer mit dieser gekoppelten Steuerungseinrichtung für die Sensorhalterung, wobei das Sensorgehäuse auf seiner in Detektionsrichtung des Sensors befindlichen Seite eine für den Sensor signaldurchlässige Abdeckung aufweist und wobei der Erfassungsbereich des Sensors im Bereich der signaldurchlässigen Abdeckung eine geringere Ausdehnung besitzt als die signaldurchlässige Abdeckung, wobei das Verfahren dadurch gekennzeichnet ist, dass mittels der Messeinrichtung geprüft wird, ob und in welchem Abschnitt des Erfassungsbereichs des Sensors die signaldurchlässige Abdeckung einen Bereich mit verringerter Signaldurchlässigkeit aufweist, und falls ein Bereich mit verringerter Signaldurchlässigkeit detektiert wird, die Position des Sensors mittels der Steuerungseinrichtung in der Weise verändert wird, dass der Bereich mit verringerter Signaldurchlässigkeit außerhalb des Erfassungsbereichs des Sensors liegt.

Nach einer bevorzugten Weiterbildung des erfindungsgemäßen Verfahrens ist ein Bereich mit verringerter Signaldurchlässigkeit dadurch definiert, dass in einer zusammenhängenden Fläche von wenigstens 1 % des Erfassungsbereichs des Sensors auf der signaldurchlässigen Abdeckung eine Dämpfung des über die Sensorik zu detektierenden Signals von wenigstens 5 %, verglichen mit der übrigen Fläche der signaldurchlässigen Abdeckung im Erfassungsbereich des Sensors, auftritt.

Die Erfindung, gemäß Anspruch 15, betrifft ferner ein Fahrzeug, insbesondere Kraftfahrzeug, das mit wenigstens einem erfindungsgemäßen Sensorsystem ausgerüstet ist. Das Sensorsystem kann beispielsweise im Front-, Heck-, oder Seitenbereich eines Fahrzeugs eingesetzt werden, z.B. im Stoßfänger, Kühlergrill, Scheinwerfer, Frontpanel, Heckpanel, Rücklicht, Dachsäule, Scheibe oder Anbauteil, wie z.B. Außenspiegel. Das Sensorsystem kann in eine Öffnung eines Karosserieaußenteils eingebaut sein. Bevorzugt ist das Sensorsystem nahtlos in die Fahrzeugteiloberfläche integriert. Besonders bevorzugt ist das Karosserieaußenteil zugleich die Sensorschutzabdeckung. Die Positionierung der Sensoren hinter Karosseriebauteilen hat mehrere Vorteile gegenüber frei stehenden Sensoren, insbesondere ästhetische, aerodynamische und reparaturtechnische Vorteile. Als Sensorsysteme kommen vor allem solche mit einer sogenannten ADAS-Funktionalität (= Advanced Driver Assistance Systems) in Betracht. Dies sind beispielsweise Lidar-Sensoren, Scannende Lidar-Sensoren, Flash-Lidar-Sensoren, GHz- und THz-Radare für Nahfeld bis Fernfelderkennung, Kameras für das sichtbare bzw. infrarote Wellenlängenspektrum. Ein mögliches bevorzugtes Anwendungsgebiet ist die 360° Umfelderkennung für hoch automatisiertes und autonomes Fahren. Weiteres Aufgabengebiet: Im Stand können diese ADAS-Sensoren für den Endkunden relevante Komfortfunktionen leisten, z.B. mechatronische Komfortfunktionen wie Systeme zum berührungslosen Öffnen und Schließen von Türen und Heckklappen, oder z.B. licht- und anzeigenbasierte Komfortfunktionen.

Die Erfindung wird im Folgenden anhand der Fign. 1 bis 4b näher erläutert. Darin zeigt
**Fig. 1** einen schematischen Sensoraufbau nach dem Stand der Technik;
**Fig. 2** einen erfindungsgemäßen Sensor mit Verschiebeeinrichtung in zwei Positionen, (2a) gestörtes Sensorsignal, (2b) ungestörtes Sensorsignal nach Korrektur der Position von Sender und Empfänger;
**Fig. 3** eine weitere erfindungsgemäße Ausführungsform wie in Fig. 2 mit zwei signaldurchlässigen Abdeckungen, sowie
**Fig.4****:** eine weitere erfindungsgemäße Ausführungsform mit Rotationseinrichtung in zwei Positionen, (4a) gestörtes Sensorsignal, (4b) ungestörtes Sensorsignal nach Rotation von Sender und Empfänger.

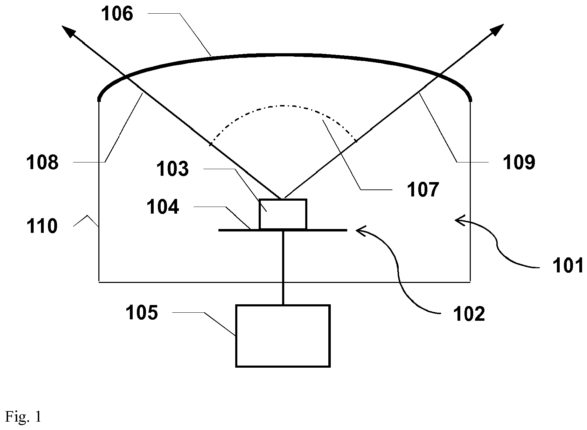

In Fig. 1 ist ein Sensorsystem 101 für ein Kraftfahrzeug schematisch in seitlicher Schnittdarstellung abgebildet. Bei dem Sensorsystem 101 handelt es sich um einen Einparksensor. Das Sensorsystem 101 umfasst ein Sensorgehäuse 110 und einen darin angeordneten Sensor 102 aus einem Sender 103 und Empfänger 104 mit einem Erfassungswinkel 107, der durch den Erfassungsbereich 108, 109 definiert ist. Der Sensor 102 ist vorliegend als Lidarsensor ausgestaltet. Dem Sensor 102 ist eine Messeinrichtung 105 zur Verarbeitung der Sensorsignale zugeordnet. Das Sensorgehäuse 110 weist auf seiner in Detektionsrichtung des Sensors befindlichen Seite eine für den Sensor 102 signaldurchlässige Abdeckung 106 auf.

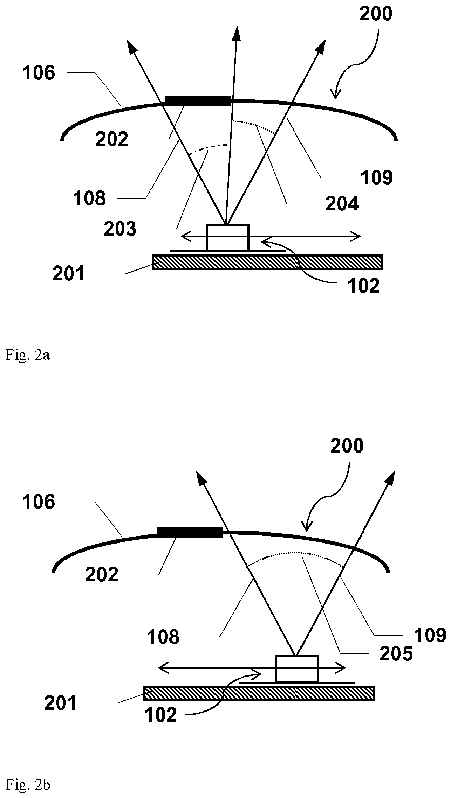

In Fig. 2a ist ein erfindungsgemäßes Sensorsystem 200 abgebildet. Bei diesem ist eine horizontal verfahrbare Sensorhalterung 201 vorgesehen, mit welcher die Position des Sensors 102 flächenparallel zur Rückwand des Sensorsystems 200 verändert werden kann, sobald auf der signaldurchlässigen Abdeckung 106 eine signalbeeinträchtigende Beschädigung 202 festgestellt wird, die einen ersten Teilabschnitt 203 des Erfassungsbereichs 108, 109 des Sensors 102 beeinträchtigt, sodass der Sensor 102 nur noch in einem zweiten Teilabschnitt 204 Signale versenden bzw. empfangen kann. In Fig. 2b ist das Sensorsystem 200 aus Fig. 2a dargestellt, nachdem der Sensor 102 horizontal in einen solchen Bereich verfahren wurde, in welchem die Beschädigung 202 außerhalb des Erfassungsbereichs 108, 109 des Sensors 102 liegt und der Sensor 102 somit wieder über seinen gesamten Erfassungswinkel 205 funktionstüchtig ist.

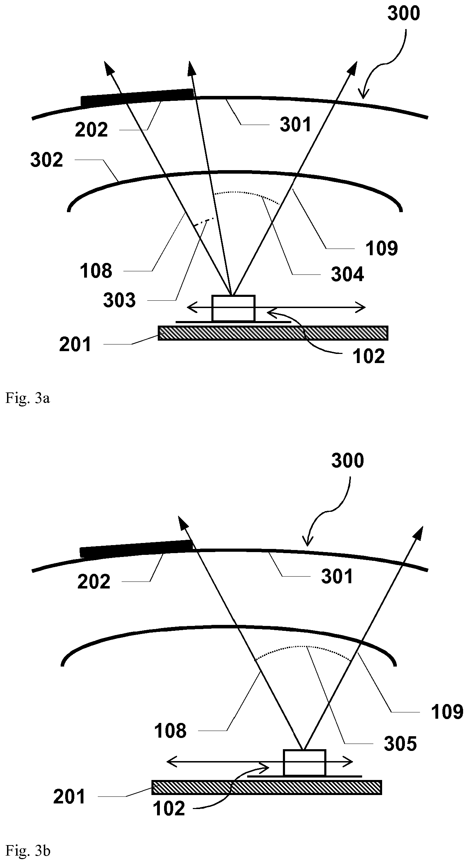

Fign. 3a und 3b zeigen eine Weiterbildung zu der in Fign. 2a und 2b dargestellten Ausführungsform. Der wesentliche Unterschied besteht darin, dass das hier gezeigte Sensorsystem 300 neben einer signaldurchlässigen Abdeckung 301 zusätzlich über eine signaldurchlässige innere Schutzabdeckung 302 verfügt, die jeweils aus Polycarbonat bestehen.

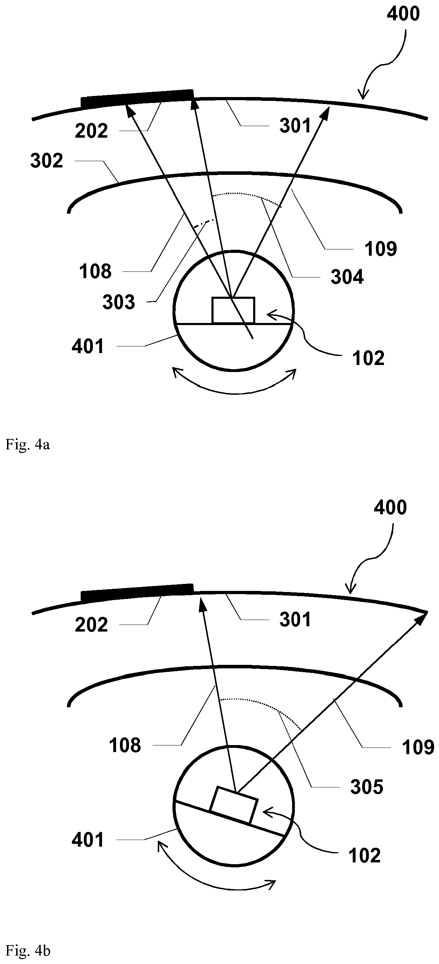

In den Fign. 4a und 4b ist eine weitere Ausführungsform des erfindungsgemäßen Sensorsystems 400 abgebildet. Auch das Sensorsystem 400 verfügt neben einer signaldurchlässigen Abdeckung 301 zusätzlich über eine signaldurchlässige innere Schutzabdeckung 302. Bei der hier gezeigten Ausgestaltung ist der Sensor 102 an einer als Rotationseinrichtung 401 ausgestalteten Sensorhalterung befestigt, mit welcher der Sensor 102 um eine oder zwei Raumachsen gekippt werden kann. Hierdurch kann im Falle des Auftretens einer Beschädigung 202 an der signaldurchlässigen Abdeckung 301 der Sensor 102 derart gekippt werden, dass sein Erfassungsbereich 108, 109 an der Beschädigung 202 vorbeigeführt und der Sensor 102 somit wieder über seinen gesamten Erfassungswinkel 305 funktionstüchtig ist.

### Bezugszeichenliste:

- 101: Sensorsystem (Stand der Technik)
- 102: Sensor
- 103: Sender
- 104: Empfänger
- 105: Messeinrichtung
- 106: signaldurchlässige Abdeckung
- 107: Erfassungswinkel
- 108: Erfassungsbereich
- 109: Erfassungsbereich
- 110: Sensorgehäuse
- 200: Sensorsystem (Erfindung)
- 201: horizontal verfahrbare Sensorhalterung
- 202: signalbeeinträchtigende Beschädigung
- 203: erster Teilabschnitt
- 204: zweiter Teilabschnitt
- 205: Erfassungswinkel
- 300: Sensorsystem (Erfindung)
- 301: signaldurchlässige Abdeckung
- 302: signaldurchlässige innere Schutzabdeckung
- 305: Erfassungswinkel
- 400: Sensorsystem (Erfindung)
- 401: als Rotationseinrichtung ausgestaltete Sensorhalterung

## Patentansprüche

1. Sensorsystem (200, 300, 400) für ein Fahrzeug, insbesondere Kraftfahrzeug, umfassend ein Sensorgehäuse und einen darin angeordneten und an einer bewegbaren Sensorhalterung (201, 401) gehaltenen aktiven oder passiven Sensor (102) mit einer auf Strahlungswellendetektion beruhenden Sensorik sowie einer dem Sensor (102) zugeordneten Messeinrichtung und einer mit dieser gekoppelten Steuerungseinrichtung für die Sensorhalterung (201, 401), wobei das Sensorgehäuse auf seiner in Detektionsrichtung des Sensors (102) befindlichen Seite eine für den Sensor (102) signaldurchlässige Abdeckung (106, 301) aufweist und wobei der Erfassungsbereich (108, 109) des Sensors (102) im Bereich der signaldurchlässigen Abdeckung (106, 301) eine geringere Ausdehnung besitzt als die signaldurchlässige Abdeckung (106, 301),
**dadurch gekennzeichnet, dass**
die Messeinrichtung derart ausgebildet ist, dass sie geeignet ist, im Erfassungsbereich des Sensors (102) zu überprüfen, ob und in welchem Abschnitt die signaldurchlässige Abdeckung (106, 301) einen Bereich mit verringerter Signaldurchlässigkeit (202) aufweist, wobei die Messeinrichtung mit der Steuerungseinrichtung in der Weise zusammenwirkt, dass die Steuerungseinrichtung die Position des Sensors (102) in der Weise verändern kann, dass der Bereich mit verringerter Signaldurchlässigkeit (202) außerhalb des Erfassungsbereichs (108, 109) des Sensors (102) liegt.

2. Sensorsystem nach Anspruch 1, **dadurch gekennzeichnet, dass** der Sensor (102) ausgewählt ist aus Radarsensoren, Lichtsensoren, insbesondere Lidar-Sensoren auf Basis von Lasern oder Leuchtdioden und Bilderfassungssensoren.

3. Sensorsystem nach Anspruch 1 oder 2, **dadurch gekennzeichnet, dass** der Sensor (102) über eine Sendeeinrichtung und eine hiervon getrennte Empfangseinrichtung verfügt, wobei die Sendeeinrichtung und/ oder die Empfangseinrichtung an der bewegbaren Sensorhalterung (201, 401) befestigt ist oder die Sendeeinrichtung und die Empfangseinrichtung jeweils separat an bewegbaren Sensorhalterungen (201, 401) befestigt sind.

4. Sensorsystem nach einem der vorstehenden Ansprüche, **dadurch gekennzeichnet, dass** die Sensorhalterung (201, 401) in alle Raumrichtungen verfahrbar, um sämtliche Achsen drehbar und/ oder kippbar ausgestaltet ist.

5. Sensorsystem nach einem der vorstehenden Ansprüche, **dadurch gekennzeichnet, dass** der Sensorhalterung (201, 401) zu ihrer Bewegung wenigstens ein Elektromotor, ein piezoelektrisches Element, oder ein hydraulisches Element zugeordnet ist.

6. Sensorsystem nach einem der vorstehenden Ansprüche, **dadurch gekennzeichnet, dass** die Sensorhalterung (201, 401) am Sensorgehäuse fixiert ist, insbesondere auf der der signaldurchlässigen Abdeckung (106, 301) gegenüberliegenden Fläche des Sensorgehäuses.

7. Sensorsystem nach einem der vorstehenden Ansprüche, **dadurch gekennzeichnet, dass** die Prüfung, ob und in welchem Abschnitt die signaldurchlässige Abdeckung (106, 301) einen Bereich mit verringerter Signaldurchlässigkeit (202) aufweist, mittels einer der Messeinrichtung zugeordneten Recheneinheit durchführbar ist, wobei die Recheneinheit insbesondere mit einem Datenverarbeitungsprogramm betreibbar ist, mittels welchem die Prüfung, ob und in welchem Abschnitt die signaldurchlässige Abdeckung (106, 301) einen Bereich mit verringerter Signaldurchlässigkeit (202) aufweist, über eine Differenzbilderkennung unter Einsatz desselben Sensors (102) oder verschiedener Sensoren vorgenommen wird, wobei bei Einsatz verschiedener Sensoren vorzugsweise eine Sensorfusion eingesetzt wird.

8. Sensorsystem nach einem der vorstehenden Ansprüche, **dadurch gekennzeichnet, dass** die Messeinrichtung und die Steuerungseinrichtung unabhängig voneinander innerhalb oder außerhalb des Sensorgehäuses positioniert sind.

9. Sensorsystem nach einem der vorstehenden Ansprüche, **dadurch gekennzeichnet, dass** die Messeinrichtung so ausgestaltet ist, dass diese ein Fehlersignal ausgeben kann, für den Fall, dass die Position des Sensors (102) nicht in der Weise veränderbar ist, dass der Bereich mit verringerter Signaldurchlässigkeit (202) außerhalb des Erfassungsbereichs (108, 109) des Sensors (102) liegt.

10. Sensorsystem nach einem der vorstehenden Ansprüche, **dadurch gekennzeichnet, dass** das Sensorsystem (200, 300, 400) derart ausgestaltet ist, dass die Prüfung, ob und in welchem Abschnitt die signaldurchlässige Abdeckung (106, 301) einen Bereich mit verringerter Signaldurchlässigkeit (202) aufweist, beim Einschalten des Sensorsystems (200, 300, 400) und /oder in frei wählbaren zeitlichen Intervallen durchführbar ist.

11. Sensorsystem nach einem der vorstehenden Ansprüche, **dadurch gekennzeichnet, dass** zwischen dem Sensor (102) und der signaldurchlässigen Abdeckung (106, 301) eine signaldurchlässige innere Schutzabdeckung (302) vorgesehen ist, welche sich vorzugsweise bis an die seitlichen Innenwände der Gehäuseabdeckung erstreckt.

12. Sensorsystem nach einem der vorstehenden Ansprüche, **dadurch gekennzeichnet, dass** die signaldurchlässige Abdeckung (106, 301) und/ oder die signaldurchlässige innere Schutzabdeckung (302) aus einem transparenten Kunststoff oder Glas aufgebaut sind, wobei der transparente Kunststoff insbesondere ausgewählt ist aus Polycarbonat, Polymethylmethacrylat, Polyethylentherephthalat, Cellulosetriacetat, amorphem Polyamid, Cycloolefinpolymer, Cycloolefincopolymer, Polyethylen, Polypropylen, Polyvinylalkohol oder aus Mischungen oder Copolymerisaten von diesen, wobei der transparente Kunststoff vorzugsweise Polycarbonat oder Polymethylmethacrylat ist.

13. Verfahren zum Betreiben eines Sensorsystems (200, 300, 400) für ein Kraftfahrzeug umfassend ein Sensorgehäuse und einen darin angeordneten und an einer bewegbaren Sensorhalterung (201, 401) gehaltenen aktiven oder passiven Sensor (102) mit einer auf Strahlungsdetektion beruhenden Sensorik sowie einer dem Sensor (102) zugeordneten Messeinrichtung und einer mit dieser gekoppelten Steuerungseinrichtung für die Sensorhalterung (201, 401), wobei das Sensorgehäuse auf seiner in Detektionsrichtung des Sensors (102) befindlichen Seite eine für den Sensor (102) signaldurchlässige Abdeckung (106, 301) aufweist und wobei der Erfassungsbereich (108, 109) des Sensors (102) im Bereich der signaldurchlässigen Abdeckung (106, 301) eine geringere Ausdehnung besitzt als die signaldurchlässige Abdeckung (106, 301),
**dadurch gekennzeichnet, dass**
mittels der Messeinrichtung geprüft wird, ob und in welchem Abschnitt des Erfassungsbereichs (108, 109) des Sensors (102) die signaldurchlässige Abdeckung (106, 301) einen Bereich mit verringerter Signaldurchlässigkeit (202) aufweist, und falls ein Bereich mit verringerter Signaldurchlässigkeit (202) detektiert wird, die Position des Sensors (102) mittels der Steuerungseinrichtung in der Weise verändert wird, dass der Bereich mit verringerter Signaldurchlässigkeit (202) außerhalb des Erfassungsbereichs (108, 109) des Sensors (102) liegt.

14. Verfahren nach Anspruch 13, **dadurch gekennzeichnet, dass** ein Bereich mit verringerter Signaldurchlässigkeit (202) dadurch definiert ist, dass in einer zusammenhängenden Fläche von wenigstens 1 % des Erfassungsbereichs (108, 109) des Sensors (102) auf der signaldurchlässigen Abdeckung (106, 301) eine Dämpfung des über die Sensorik zu detektierenden Signals von wenigstens 5 %, verglichen mit der übrigen Fläche der signaldurchlässigen Abdeckung (106, 301) im Erfassungsbereich (108, 109) des Sensors (102), auftritt.

15. Fahrzeug, insbesondere Kraftfahrzeug, das mit wenigstens einem Sensorsystem (200, 300, 400) nach einem der Ansprüche 1 bis 12 ausgerüstet ist.

## Claims

1. Sensor system (200, 300, 400) for a vehicle, in particular a motor vehicle, comprising a sensor housing and an active or passive sensor (102) arranged therein and held on a movable sensor holder (201, 401) with sensor technology based on radiation wave detection as well as a measuring device associated with the sensor (102) and a control device, coupled to said measuring device, for the sensor holder (201, 401), wherein the sensor housing has a signal-transmissive cover (106, 301) for the sensor (102) on its side located in the detection direction of the sensor (102) and wherein the detection area (108, 109) of the sensor (102) in the area of the signal-transmissive cover (106, 301) has a smaller extent than the signal-transmissive cover (106, 301),
**characterized in that**
the measuring device is designed in such a way that it is suitable to check in the detection area of the sensor (102) whether and in which section the signal-transmissive cover (106, 301) has an area with reduced signal transmissivity (202), wherein the measuring device cooperates with the control device in such a way that the control device can change the position of the sensor (102) in such a way that the area with reduced signal transmissivity (202) is outside the detection area (108, 109) of the sensor (102).

2. Sensor system according to Claim 1, **characterized in that** the sensor (102) is selected from radar sensors, light sensors, in particular lidar sensors based on lasers or light-emitting diodes and image acquisition sensors.

3. Sensor system according to Claim 1 or 2, **characterized in that** the sensor (102) has a transmitting device and a separate receiving device, wherein the transmitting device and/or the receiving device is fixed to the movable sensor holder (201, 401) or the transmitting device and the receiving device are each separately fixed to movable sensor holders (201, 401).

4. Sensor system according to any one of the above claims, **characterized in that** the sensor holder (201, 401) is designed to be movable in all spatial directions, and rotatable and/or tiltable about all axes.

5. Sensor system according to any one of the above claims, **characterized in that** the sensor holder (201, 401) is assigned at least an electric motor, a piezoelectric element, or a hydraulic element for the movement thereof.

6. Sensor system according to any one of the above claims, **characterized in that** the sensor holder (201, 401) is fixed to the sensor housing, in particular on the area of the sensor housing opposite from the signal-transmissive cover (106, 301).

7. Sensor system according to any one of the above claims, **characterized in that** the check of whether and in which section the signal-transmissive cover (106, 301) has an area with reduced signal transmissivity (202) can be carried out by means of a computing unit assigned to the measuring device, wherein the computing unit can in particular be operated with a data processing program, by means of which the check of whether and in which section the signal-transmissive cover (106, 301) has an area with reduced signal transmissivity (202) is carried out by differential image detection using the same sensor (102) or different sensors, wherein sensor fusion is preferably used when using different sensors.

8. Sensor system according to any one of the above claims, **characterized in that** the measuring device and the control device are positioned independently of each other inside or outside the sensor housing.

9. Sensor system according to any one of the above claims, **characterized in that** the measuring device is designed in such a way that it can output an error signal in the event that the position of the sensor (102) cannot be changed in such a way that the area with reduced signal transmissivity (202) is outside the detection area (108, 109) of the sensor (102).

10. Sensor system according to any one of the above claims, **characterized in that** the sensor system (200, 300, 400) is designed in such a way that the check of whether and in which section the signal-transmissive cover (106, 301) has an area with reduced signal transmissivity (202) can be carried out when switching on the sensor system (200, 300, 400) and/or at freely selectable time intervals.

11. Sensor system according to any one of the above claims, **characterized in that** a signal-transmissive inner protective cover (302) which preferably extends to the lateral inner walls of the housing cover is provided between the sensor (102) and the signal-transmissive cover (106, 301).

12. Sensor system according to any one of the above claims, **characterized in that** the signal-transmissive cover (106, 301) and/or the signal-transmissive inner protective cover (302) is/are constructed of a transparent plastic or glass, wherein the transparent plastic is in particular selected from polycarbonate, polymethyl methacrylate, polyethylene terephthalate, cellulose triacetate, amorphous polyamide, cycloolefin polymer, cycloolefin copolymer, polyethylene, polypropylene, polyvinyl alcohol or from mixtures or copolymers of these, wherein the transparent plastic is preferably polycarbonate or polymethyl methacrylate.

13. Method for operating a sensor system (200, 300, 400) for a motor vehicle comprising a sensor housing and an active or passive sensor (102) arranged therein and held on a movable sensor holder (201, 401) with sensor technology based on radiation detection as well as a measuring device associated with the sensor (102) and a control device, coupled to said measuring device, for the sensor holder (201, 401), wherein the sensor housing has a signal-transmissive cover (106, 301) for the sensor (102) on its side located in the detection direction of the sensor (102) and wherein the detection area (108, 109) of the sensor (102) in the area of the signal-transmissive cover (106, 301) has a smaller extent than the signal-transmissive cover (106, 301),
**characterized in that**
the measuring device is used to check whether and in which section of the detection area (108, 109) of the sensor (102) the signal-transmissive cover (106, 301) has an area with reduced signal transmissivity (202), and if an area with reduced signal transmissivity (202) is detected, the position of the sensor (102) is changed by means of the control device in such a way that the area with reduced signal transmissivity (202) is outside the detection area (108, 109) of the sensor (102).

14. Method according to Claim 13, **characterized in that** an area with reduced signal transmissivity (202) is defined **in that** attenuation of the signal to be detected by the sensor technology of at least 5% occurs in a contiguous area of at least 1% of the detection area (108, 109) of the sensor (102) on the signal-transmissive cover (106, 301) compared to the remaining area of the signal-transmissive cover (106, 301) in the detection area (108, 109) of the sensor (102).

15. Vehicle, in particular a motor vehicle, which is equipped with at least one sensor system (200, 300, 400) according to any one of Claims 1 to 12.

## Revendications

1. Système capteur (200, 300, 400) pour un véhicule, notamment véhicule automobile, comprenant un boîtier de capteur et un capteur (102) actif ou passif, disposé dans celui-ci et maintenu sur un porte-capteur (201, 401) mobile, avec un système de détection reposant sur la détection d'ondes de rayonnement ainsi qu'un dispositif de mesure associé au capteur (102) et un dispositif de commande couplé à celui-ci pour le porte-capteur (201, 401), le boîtier de capteur possédant, sur son côté de détection qui se trouve dans la direction de détection du capteur (102), un chapeau (106, 301) perméable aux signaux pour le capteur (102) et la zone de détection (108, 109) du capteur (102) dans la zone du chapeau (106, 301) perméable aux signaux possédant une étendue plus petite que le chapeau (106, 301) perméable aux signaux,
**caractérisé en ce que**
le dispositif de mesure est configuré de telle sorte qu'il est approprié pour vérifier, dans la zone de détection du capteur (102), si et dans quelle portion le chapeau (106, 301) perméable aux signaux présente une zone ayant une perméabilité aux signaux (202) réduite, le dispositif de mesure coopérant avec le dispositif de commande de manière à ce que le dispositif de commande puisse modifier la position du capteur (102) de manière à ce que la zone ayant une perméabilité aux signaux (202) réduite se trouve en-dehors de la zone de détection (108, 109) du capteur (102).

2. Système capteur selon la revendication 1, **caractérisé en ce que** le capteur (102) est sélectionné parmi des capteurs radar, des capteurs de lumière, notamment des capteurs Lidar à base de lasers ou de diodes électroluminescentes et de capteurs d'acquisition d'images.

3. Système capteur selon la revendication 1 ou 2, **caractérisé en ce que** le capteur (102) dispose d'un dispositif d'émission et d'un dispositif de réception séparé de celui-ci, le dispositif d'émission et/ou le dispositif de réception étant fixé au porte-capteur (201, 401) mobile ou le dispositif d'émission et le dispositif de réception étant respectivement fixés séparément à des porte-capteurs (201, 401) mobiles.

4. Système capteur selon l'une des revendications précédentes, **caractérisé en ce que** le porte-capteur (201, 401) est configuré de manière à pouvoir être déplacé dans toutes les directions de l'espace, rotatif et/ou basculant autour de tous les axes.

5. Système capteur selon l'une des revendications précédentes, **caractérisé en ce qu'**au moins un moteur électrique, un élément piézoélectrique ou un élément hydraulique est associé au porte-capteur (201, 401) pour son mouvement.

6. Système capteur selon l'une des revendications précédentes, **caractérisé en ce que** le porte-capteur (201, 401) est fixé au boîtier de capteur, notamment sur la surface du boîtier de capteur à l'opposé du chapeau (106, 301) perméable aux signaux.

7. Système capteur selon l'une des revendications précédentes, **caractérisé en ce que** la vérification si et dans quelle portion le chapeau (106, 301) perméable aux signaux présente une zone ayant une perméabilité aux signaux (202) réduite peut être réalisée au moyen d'une unité de calcul associée au dispositif de mesure, l'unité de calcul pouvant notamment être exploitée avec un programme de traitement de données au moyen duquel la vérification si et dans quelle portion le chapeau (106, 301) perméable aux signaux présente une zone ayant une perméabilité aux signaux (202) réduite est effectuée par le biais d'une reconnaissance d'image différentielle en utilisant le même capteur (102) ou des capteurs différents, une fusion de capteur étant de préférence appliquée dans le cas de l'utilisation de capteurs différents.

8. Système capteur selon l'une des revendications précédentes, **caractérisé en ce que** le dispositif de mesure et le dispositif de commande sont positionnés indépendamment l'un de l'autre à l'intérieur ou à l'extérieur du boîtier de capteur.

9. Système capteur selon l'une des revendications précédentes, **caractérisé en ce que** le dispositif de mesure est configuré de telle sorte que celui-ci peut délivrer un signal de défaut dans le cas où la position du capteur (102) ne peut pas être modifiée de manière à ce que la zone ayant une perméabilité aux signaux (202) réduite se trouve en-dehors de la zone de détection (108, 109) du capteur (102).

10. Système capteur selon l'une des revendications précédentes, **caractérisé en ce que** système capteur (200, 300, 400) est configuré de telle sorte que la vérification si et dans quelle portion le chapeau (106, 301) perméable aux signaux présente une zone ayant une perméabilité aux signaux (202) réduite peut être effectuée lors de la mise sous tension du système capteur (200, 300, 400) et/ou à des intervalles de temps pouvant être sélectionnés librement.

11. Système capteur selon l'une des revendications précédentes, **caractérisé en ce qu'**un chapeau de protection interne (302) perméable aux signaux est présent entre le capteur (102) et le chapeau (106, 301) perméable aux signaux, lequel s'étend de préférence jusqu'aux parois intérieures latérales du chapeau de boîtier.

12. Système capteur selon l'une des revendications précédentes, **caractérisé en ce que** le chapeau (106, 301) perméable aux signaux et/ou le chapeau de protection interne (302) perméable aux signaux sont constitués d'une matière plastique transparente ou de verre, la matière plastique transparente étant notamment choisie parmi le polycarbonate, le polyméthacrylate de méthyle, le polyéthylène téréphtalate, le triacétate de cellulose, le polyamide amorphe, le polymère de cyclooléfine, le copolymère de cyclooléfine, le polyéthylène, le polypropylène, l'alcool polyvinylique encore ou des mélanges ou des copolymères de ceux-ci, la matière plastique transparente étant de préférence du polycarbonate ou du polyméthacrylate de méthyle.

13. Procédé pour faire fonctionner un système capteur (200, 300, 400) pour un véhicule automobile, comprenant un boîtier de capteur et un capteur (102) actif ou passif, disposé dans celui-ci et maintenu sur un porte-capteur (201, 401) mobile, avec un système de détection reposant sur la détection de rayonnement ainsi qu'un dispositif de mesure associé au capteur (102) et un dispositif de commande couplé à celui-ci pour le porte-capteur (201, 401), le boîtier de capteur possédant, sur son côté de détection qui se trouve dans la direction de détection du capteur (102), un chapeau (106, 301) perméable aux signaux pour le capteur (102) et la zone de détection (108, 109) du capteur (102) dans la zone du chapeau (106, 301) perméable aux signaux possédant une étendue plus petite que le chapeau (106, 301) perméable aux signaux,
**caractérisé en ce que**
un contrôle est effectué au moyen du dispositif de mesure afin de vérifier si et dans quelle portion de la zone de détection (108, 109) du capteur (102) le chapeau (106, 301) perméable aux signaux présente une zone ayant une perméabilité aux signaux (202) réduite et, dans le cas où une zone ayant une perméabilité aux signaux (202) réduite est détectée, la position du capteur (102) est modifiée de manière à ce que la zone ayant une perméabilité aux signaux (202) réduite se trouve en-dehors de la zone de détection (108, 109) du capteur (102) .

14. Procédé selon la revendication 13, **caractérisé en ce qu'**une zone ayant une perméabilité aux signaux (202) réduite est définie **en ce que** dans une surface d'un seul tenant de moins de 1 % de la zone de détection (108, 109) du capteur (102) sur le chapeau (106, 301) perméable aux signaux, il se produit une atténuation de moins de 5 % du signal à détecter par le biais du système de détection en comparaison de la surface restante du chapeau (106, 301) perméable aux signaux dans la zone de détection (108, 109) du capteur (102).

15. Véhicule, notamment véhicule automobile, qui est équipé d'au moins d'un système capteur (200, 300, 400) selon l'une des revendications 1 à 12.
